# EUROPÄISCHE PATENTANMELDUNG

(11) **EP 4 390 804 A1**
(43) Veröffentlichungstag der Anmeldung: **26.06.2024**
(21) Anmeldenummer: 23215709.9
(22) Anmeldetag: 12.12.2023
(51) Int. Cl.: G06Q 10/08, B07C 1/04, B07C 1/10, B07C 3/08, B07C 3/14, G06Q 10/0832, G06N 20/00

(54) **VERFAHREN ZUM ANALYSIEREN VON STÖRUNGEN BEI EINEM BETRIEB EINES HANDHABUNGSSYSTEMS, VERFAHREN ZUM TRAINIEREN ODER UMTRAINIEREN EINES KLASSIFIKATORS, COMPUTERPROGRAMM UND SYSTEM ZUM ANALYSIEREN VON STÖRUNGEN**

(30) Priorität: 20.12.2022 DE 102022134121
(71) Anmelder: Körber Supply Chain Logistics GmbH, 78467 Konstanz (DE)
(72) Erfinder: Zettler, Michael, 78476 Allensbach (DE); Reichelt, Christoph, London TW 80 NJ (GB)
(74) Vertreter: Müller Schupfner & Partner Patent- und Rechtsanwaltspartnerschaft mbB (Muc)

(57) **Zusammenfassung**

Es wird ein Verfahren zum Analysieren von Störungen bei einem Betrieb eines Handhabungssystems (1), welches dazu ausgestaltet ist, Poststücke (12) zu handhaben, bereitgestellt. Das Verfahren umfasst die Schritte:
- Identifizieren von zumindest einem Merkmal eines dem Handhabungssystem (1) zuzuführenden Poststücks (12), um Poststückinformationen zu erlangen,
- Erfassen einer Störung bei einem Betrieb des Handhabungssystems (1), um Störungsinformationen zu erlangen,
- Bestimmen von zumindest einem Störungspoststück (12) oder einer Störungspoststückgruppe, welches oder welche die Störung ausgelöst hat, und
- Zuordnen der Störungsinformationen zu den Poststückinformationen des Störungspoststücks (12) oder der Störungspoststückgruppe. Ferner wird ein Verfahren zum Trainieren oder Umtrainieren eines Klassifikators zur Bestimmung von Bewertungsinformationen über einem Handhabungssystem (1) zuzuführende Poststücke (12), ein Computerprogramm und ein System (10) zum Analysieren von Störungen bei einem Betrieb eines Handhabungssystems (1), welches dazu ausgestaltet ist, Poststücke (12) zu handhaben bereitgestellt.

## Beschreibung

Die vorliegende Erfindung betrifft ein Verfahren zum Analysieren von Störungen bei einem Betrieb eines Handhabungssystems, ein Verfahren zum Trainieren oder Umtrainieren eines Klassifikators zur Bestimmung von Bewertungsinformationen über einem Handhabungssystem zuzuführende Poststücke, ein Computerprogramm und ein System zum Analysieren von Störungen bei einem Betrieb eines Handhabungssystems.

Poststücke können bei deren Handhabung mittels Förder- oder Sortiertechnik Störungen und/oder Ausfälle hervorrufen. Ferner kann es bei einer fehlerhaften Handhabung von Poststücken zu einer Beschädigung der Poststücke kommen. Poststücke, die nicht korrekt durch ein Handhabungssystem abgefertigt werden können, können als nicht förderfähige Poststücke bezeichnet werden. Solche Poststücke können jedoch trotzdem in Handhabungssysteme gelangen und dort zu Störungen führen. Ferner kann es sein, dass eigentlich als förderfähig geltende Poststücke aufgrund von einer besonderen Ausgestaltung der Poststücke zu Störungen in Handhabungssystemen führen können. Störungen in Handhabungssystemen können dann zu Ausfällen der Handhabungssysteme führen. Solche Ausfälle in Handhabungssystemen führen oft zu einem hohen manuellen Arbeitsaufwand, um die Störungen zu beseitigen. Insbesondere bei der Abfertigung von Poststücken hat aufgrund der engen zeitlichen Taktung, ein Ausfall von Handhabungssystemen besonders gravierende Auswirkungen.

WO 2019/161983 A1 offenbart ein Verfahren zum Erkennen von nicht förderfähigen Poststücken.

Nicht förderfähige Poststücke werden normalerweise auf Förderhilfen transportiert. Insofern kann es bei implementierten Prozessen selten zu Problemen mit solchen nicht förderfähigen Poststücken kommen, da spezielle Erkennungsverfahren eingesetzt sind, um solche Poststücke zu erkennen. Jedoch sind die Erkennungsverfahren in ihrer Leistung limitiert und so gelangen oft als förderfähig erachtete Poststücke in Handhabungssystemen, die dort jedoch dann zu Störungen führen.

Daher ist es eine Aufgabe der vorliegenden Erfindung ein Verfahren und eine Vorrichtung bereitzustellen, die Störungen in Handhabungssystemen analysieren können. Basierend auf einer solchen Analyse können geeignete Gegenmaßnahmen ergriffen werden.

Diese Aufgabe wird durch ein Verfahren zum Analysieren von Störungen mit den Merkmalen des Anspruchs 1, mit einem Verfahren zum Trainieren oder um Trainieren eines Klassifikators mit den Merkmalen des Anspruchs 13, mit einem Computerprogramm mit den Merkmalen des Anspruchs 14 und mit einem System zum Analysieren von Störungen bei einem Betrieb eines Handhabungssystems mit den Merkmalen des Anspruchs 15 gelöst.

Gemäß einem Aspekt der vorliegenden Erfindung wird ein Verfahren zum Analysieren von Störungen bei einem Betrieb eines Handhabungssystems, welches dazu ausgestaltet ist, Poststücke zu handhaben, bereitgestellt. Vorzugsweise umfasst das Verfahren ein Identifizieren von zumindest einem Merkmal eines dem Handhabungssystem zurückzuführenden Poststücks, um Poststückinformationen zu erlangen. Ferner kann das Verfahren ein Erfassen einer Störung bei einem Betrieb des Handhabungssystems umfassen, um Störungsinformationen zu erlangen. Zudem kann das Verfahren ein Bestimmen von zumindest einem Störungspoststück oder einer Störungspoststückgruppe umfassen, welches oder welche die Störung ausgelöst hat. Darüber hinaus kann das Verfahren ein Zuordnen der Störungsinformation zu den Poststückinformationen des Störungspoststücks oder der Störungspoststückgruppe umfassen.

Gegenüber dem bekannten Stand der Technik bietet das obige Verfahren die Möglichkeit, Informationen, die über Poststücke gesammelt werden, mit Erfahrungswerten, wie diese Poststücke in Handhabungssystemen abgefertigt werden können, zu ergänzen. Somit kann eine Handhabbarkeit von Poststücken basierend auf den Eigenschaften der Poststücke abgeschätzt werden. Somit können Eigenschaften von Poststücken eine Störanfälligkeit bei der Handhabung dieser Poststücke zugeordnet werden. Gegenüber dem aus dem Stand der Technik bekannten Vergleichsverfahren, bei dem lediglich statische und vorbestimmte Parameter darüber entscheiden, ob ein Poststück förderfähig ist oder nicht, kann durch das erfindungsgemäße Verfahren ein lernendes oder anpassbares System bereitgestellt werden. Ferner kann mit dem obigen Verfahren eine Datenbank erstellt werden, die Eigenschaften von Poststücken eine bestimmte Handhabbarkeit in dem Handhabungssystem zuweist. Folglich kann bei Einsatz des obigen Verfahrens ein Handhabungssystem langfristig effizient betrieben werden, da weniger Störungen auftreten. Mit anderen Worten können nicht förderfähige Poststücke frühzeitig ausgeschleust werden oder das Handhabungssystem an die Poststücke angepasst werden.

Das Handhabungssystem kann beispielsweise ein Bandförderer, eine Weiche, ein Crossbelt-Sorter, eine Abwurfvorrichtung, ein Singulator, ein Teleskopförderer oder ein anders gearteter Sorter sein. Der Sorter kann dazu ausgestaltet sein, Poststücke zu sortieren. Ferner kann es sich bei dem Handhabungssystem um einen Vereinzeler, einen Zwischenspeicher oder sonstige Poststückabfertigungssysteme handeln. Die Poststücke können Sendungen sein, die beispielsweise in Briefzentren abgefertigt werden. Poststücke können Päckchen, Pakete Taschen, Beutel oder dergleichen sein. Handhaben kann bedeuten, dass das Poststück, welches dem Handhabungssystem zugeführt wird, in irgendeiner Weise bewegt, gelenkt, sortiert oder in sonstiger Weise beeinflusst wird. Insbesondere wird bei dem Handhabungssystem eine Transportrichtung und/oder eine Orientierung des Poststücks verändert. Mit anderen Worten muss in dem Handhabungssystem irgendeine Aktion mit dem Poststück geschehen, bei welcher das Handhabungssystem das Poststück kontaktieren muss. Das Identifizieren von zumindest einem Merkmal eines Poststücks kann durchgeführt werden, bevor das Poststück das Handhabungssystem erreicht. Mit anderen Worten kann das Identifizieren stromaufwärts in der Transportrichtung des Poststücks hinsichtlich des Handhabungssystems geschehen. Dadurch kann, bevor das Poststück das Handhabungssystem erreicht, das Poststück identifiziert werden. Bei der Identifizierung kann zumindest ein Merkmal des Poststücks aufgenommen werden. Die Identifizierung des zumindest einen Merkmals kann beispielsweise durch zumindest einen Scanner, zumindest eine Kamera, oder dergleichen realisiert sein. Vorzugsweise wird eine Sechs-Seiten-Ansicht des Poststücks aufgenommen und durch Bilderkennung zumindest ein Merkmal des Poststücks identifiziert. Das zumindest eine Merkmal kann dann in den Poststückinformationen abgespeichert werden. Die Poststückinformationen können das Poststück individuell identifizieren. Dies kann beispielsweise durch eine neu zu vergebende Identifizierung oder durch das Lesen einer bereits vergebenen Identifizierung realisiert sein. Zur Durchführung der Identifizierung kann eine Identifizierungseinheit vorgesehen sein. Die Identifizierungseinheit kann hinsichtlich einer Transportrichtung stromaufwärts des Handhabungssystems angeordnet sein. Vorzugsweise ist die Identifizierungseinheit eine bereits in dem Poststück-Abfertigungssystem vorhandene Identifizierungseinheit. Die Poststückinformationen können computerlesbare Daten sein. Vorzugsweise liegen die Poststückinformationen in Tabellenform vor. Die Poststückinformationen können eine Poststück-ID, zumindest ein Poststückmerkmal und/oder eine Objektklasse umfassen. Das Erfassen einer Störung des Handhabungssystems kann durch ein Überwachungssystem realisiert sein, welches mehrere oder einzelne Funktionsabschnitte des Handhabungssystems überwachen kann. Beispielsweise kann der Motorstrom eines Antriebs in dem Handhabungssystem gemessen werden. Verklemmt sich beispielsweise ein Poststück in dem Handhabungssystem, kann der Motorstrom stark ansteigen, was von dem Überwachungssystem erkannt werden kann. Daraufhin können die Störungsinformationen erlangt werden. Die Störungsinformationen können indikativ dafür sein, dass ein geplanter oder angedachter Betrieb des Handhabungssystems nicht durchgeführt werden kann. Ferner kann auch eine Störung vorliegen, wenn beispielsweise mehr Poststücke dem Handhabungssystem zugeführt werden, als aus dem Handhabungssystem abgeführt werden. Basierend darauf kann erfasst werden, dass in dem Handhabungssystem ein Poststück fälschlicherweise verblieben ist. In diesem Fall kann das Überwachungssystem eine oder mehrere Lichtschranken umfassen, die eine Zufuhr und/oder eine Abfuhr von Poststücken zu und/oder aus dem Handhabungssystem überwachen können. Ferner kann eine Störung auch manuell erfasst werden. So kann ein Nutzer beispielsweise ein aus dem Handhabungssystem herausgefallenes Poststück finden und entsprechend eine Störung melden, so dass Störungsinformationen erzeugt werden können. Nach dem Erfassen einer Störung kann das ursächliche Störungspoststück bestimmt werden. Genauer gesagt kann eine Störung auf ein oder mehrere Poststücke zurückgeführt werden. Ist genau identifizierbar, welches Poststück für die Störung gesorgt hat, kann genau ein Störungspoststück bestimmt werden. Ist es demgegenüber nicht eindeutig bestimmbar, ob eines oder mehrere Poststücke für die erfasste Störung ursächlich sein können, kann eine Störungspoststückgruppe bestimmt werden. Die Störungspoststückgruppe kann eine Vielzahl von Poststücken umfassen. So kann das Bestimmen eines Störungspoststücks oder einer Störungspoststückgruppe auch davon abhängig sein, welches Überwachungssystem dafür vorgesehen ist, ein Störungspoststück zu bestimmen. Ist das Überwachungssystem beispielsweise dazu ausgelegt, individuell die Poststücke beim Durchlauf durch das Handhabungssystem zu tracken, kann ein individuelles Störungspoststück bestimmt werden. Demgegenüber kann bei anderen Überwachungssystemen eine solche Bestimmung nicht möglich sein. Hier kann dann eine Störungspoststückgruppe bestimmt werden, die beispielsweise alle Poststücke umfasst, die derzeit (d. h. beim Auftreten der Störung) in dem Handhabungssystem präsent sind. Das Zuordnen der Störungsinformationen zu den Poststückinformationen kann beispielsweise derart ausgeführt werden, dass die Störungsinformationen den tabellarisch abgelegten Poststückinformation zugeordnet werden. Werden die Störungsinformation lediglich in Bezug auf ein einzelnes Poststück erfasst, so werden diese den Poststückinformationen des Störungspoststücks zugeordnet. Werden Störungsinformation dagegen für eine Vielzahl von Poststücken erfasst, werden die Störungsinformationen jeder Poststückinformation jedes Poststücks in der Störungspoststückgruppe zugeordnet. Dadurch kann eine Informationsquelle geschaffen werden, die Informationen darüber erhält, welche Poststücke zu welchen Störungen in dem Handhabungssystem führen. Genauer gesagt können die Poststückinformationen indikativ dafür sein, welche Eigenschaften des Poststücks zu Störungen in dem Handhabungssystem führen. Ferner kann bestimmt werden, welche Eigenschaften der Poststücke zu welchen Störungen führen. Basierend darauf können Analysen durchgeführt werden, um Handhabungssysteme anzupassen oder um potentielle Störungspoststücke vor Eintreten in das Handhabungssystem auszusortieren. Diese Informationen (d. h. Poststückinformationen und Störungsinformationen) können in Echtzeit erfasst und zentral oder dezentral gespeichert werden. Ferner können diese Informationen durch ein Netzwerk in Echtzeit an anderen Orten verfügbar gemacht werden. Dadurch ist es möglich, Informationen Standortübergreifend auszutauschen was besonders vorteilhaft ist, wenn dieselben Handhabungssysteme an verschiedenen Standorten eingesetzt werden. So können selbst neue Standorte mit bereits gemachten Erfahrungen (Poststückinformationen und Störungsinformationen) versehen werden, sodass selbst bei neuen Standorten eine effiziente Betriebsanpassung möglich ist. Vorzugsweise handelt es sich bei dem Verfahren um ein Analysieren von Störungen, die durch ein Poststück. Mit anderen Worten kann ausschließlich eine Interaktion zwischen Handhabungssystem und Poststück analysiert werden. Demgegenüber können Systemeigenschaften des Handhabungssystems selbst, wie beispielsweise Komponentenselbsttest oder dergleichen, bei der Analyse unberücksichtigt bleiben. Dies liefert den Vorteil, dass lediglich abhängig vom jeweiligen Poststück auf eine Handhabbarkeit des Poststücks geschlossen werden kann. Das Erfassen einer Störung beim Betrieb des Handhabungssystems kann erfolgen, wenn das Handhabungssystem ein Poststück handhabt. Mit anderen Worten kann ein Betrieb immer eine Wechselwirkung zwischen Handhabungssystem und Poststück umfassen. Somit kann der Betrieb im vorliegenden Sinne nicht vorliegen, wenn kein Poststück von dem Handhabungssystem gehandhabt wird.

Vorzugsweise umfassen die Störungsinformationen eine Position und/oder eine Störungsart des Störungspoststücks beim Auftreten der Störung in dem Handhabungssystem. Mit anderen Worten können die Störungsinformationen für verschiedene Positionen in dem Handhabungssystem erfasst werden. Beispielsweise kann das Handhabungssystem in mehrere Teilabschnitte unterteilt sein, wobei eine Störung für jeden Teilabschnitt individuell erkannt und/oder erfasst werden kann. Somit kann genau bestimmt werden, an welchem Abschnitt die Störung in dem Handhabungssystem aufgetreten ist. Dadurch für jede Stelle in dem Handhabungssystem bestimmt werden, welche Poststückeigenschaften zu Störungen führen. Die Störungsart kann beispielsweise indikativ dafür sein, ob sich ein Poststück in dem Handhabungssystem verklemmt, verloren geht oder auf sonstige Weise eine Störung auslöst und/oder beschädigt wird. Dadurch können Informationen gewonnen werden, die bei einer Umgestaltung des Handhabungssystems berücksichtigt werden können.

Vorzugsweise wird die Position des Störungspoststücks basierend auf einem Tracking des Störungspoststücks bei einem Durchlaufen des Handhabungssystems bestimmt und/oder vorzugsweise wird die Position des Störungspoststücks basierend auf einem Betriebsparameter des Handhabungssystems insbesondere einer Transportgeschwindigkeit der Poststücke und/oder einem Durchsatz des Handhabungssystems, bestimmt. Das Tracking kann eine Positionsnachverfolgung der in dem Handhabungssystem gehandhabten Poststücke sein. Das Tracking kann beispielsweise durch eine visuelle Verfolgung des Poststücks bei einem Durchlaufen des Handhabungssystems realisiert sein. Ferner kann auf dem Poststück auch eine Erkennungsmarke angeordnet sein, die eine Verfolgung bzw. ein Tracking durch das Handhabungssystem erlauben. Ferner kann ein Tracking durch ein Überwachungssystem in dem Handhabungssystem realisiert sein. Mit dem Überwachungssystem kann eine Transporteinrichtung des Handhabungssystems überwacht werden. So kann das Handhabungssystem beispielsweise eine Wiegeeinrichtung aufweisen, die aufgrund des Gewichts bzw. der Belastung des Handhabungssystems, eine Position des Poststücks in dem Handhabungssystem ermitteln kann. Ferner kann die Position des Poststücks in dem Handhabungssystem durch Betriebsparameter des Handhabungssystems identifiziert werden. So kann beispielsweise die Zeit gemessen werden, seitdem das Poststück eine Überwachte Stelle in dem Handhabungssystem und/oder außerhalb des Handhabungssystems (beispielsweise die Stelle, an der die Identifizierung durchgeführt wird) passiert hat, bis zum Auftreten einer Störung. Mit Hilfe der gemessenen Zeit und der Transportgeschwindigkeit, welche als Betriebsparameter des Handhabungssystems bekannt sein kann, kann auf die zurückgelegte Strecke und damit auf die Position des Poststücks in dem Handhabungssystem zurückgeschlossen werden. Ferner kann ein Durchsatz von Poststücken durch das Handhabungssystem berücksichtigt werden. Damit kann bekannt sein, wie viele Poststücke in dem Handhabungssystem befindlich sind und diesen Poststücken beispielsweise als Störungspoststückgruppe eine Position zugeordnet werden. Ferner kann ein Abstand zwischen den Poststücken auf einer Transporteinrichtung bekannt sein, wodurch ebenfalls auf eine Position in dem Handhabungssystem zurück geschlossen werden kann. Durch die Bestimmung der Position in dem Handhabungssystem, an welcher eine Störung auftritt, können für verschiedene Positionen die jeweils dort auftretenden Störungsinformationen den Poststückinformationen zugeordnet werden. Somit kann auf einfache Art und Weise bestimmt werden, welche Position bzw. welche Stelle in dem Handhabungssystems zu Problemen im Betriebsablauf des Handhabungssystems führen kann. Ferner kann eine Position eines Poststücks durch zumindest eine Lichtschranke bestimmt werden. Dazu kann das Überwachungssystem zumindest eine Lichtschranke umfassen, die bei passieren eines Poststücks ein Positionssignal ausgeben kann. Das Überwachungssystem kann eine Zeit zwischen der Identifizierung des Poststücks und einem Passieren eines Poststücks der Lichtschranke messen. Durch eine bekannte Transportgeschwindigkeit des Poststücks kann bestimmt werden, um welches Poststück es sich handelt. Somit kann auf einfache Art und Weise eine Position des Poststücks in dem Handhabungssystem bestimmt werden.

Vorzugsweise umfassen die Poststückinformationen ein Gewicht, eine Größe, eine Länge, eine Breite, eine Höhe, eine Verschlussart und/oder eine Oberflächenbeschaffenheit des Poststücks. Mit anderen Worten kann durch die Poststückinformationen eine Eigenschaft des Poststück angegeben werden. Bei den Eigenschaften kann es sich insbesondere um Eigenschaften handeln, die bei einer Handhabung des Poststücks eine Rolle spielen. Das Gewicht des Poststücks kann das Gesamtgewicht aus Inhalt und Verpackung des Poststücks sein. Die Größe des Poststücks kann beispielsweise ein Volumen sein, welches das Poststück im Raum einnimmt. Eine Länge, eine Breite und/oder eine Höhe können die Abmessungen des Poststücks im dreidimensionalen Raum beschreiben. Hierbei kann jeweils nur eine oder zwei Abmessungen angegeben sein. Je nach Handhabungssystem, kann es lediglich von Interesse sein, nur eine Abmessung zu kennen. Ferner können auch alle drei Abmessungen in den Poststückinformationen umfasst sein. Eine Verschlussart kann beispielsweise beschreiben, ob das Poststück mit einem Klebeband, einer Schnur, einem Band, einem Hakenelement oder ähnlichem verschlossen ist. Dies kann insbesondere in einem Handhabungssystem eine Rolle spielen, bei dem das Poststück mit einer Sauggreifvorrichtung gegriffen werden soll. So kann beispielsweise ein abschnittsweise vorgesehenes Klebeband eine andere Eigenschaft aufweisen als das übrige Poststück. Ferner können Schnüre, Kordeln oder Bänder bei bestimmten Handhabungssystemen eine Rolle bei der Handhabung spielen und können somit in den Poststückinformationen hinterlegt werden. Die Oberflächenbeschaffenheit kann eine Rolle spielen bei einer Beurteilung, wie das Poststück zu greifen ist. Durch Hinterlegen der einzelnen Eigenschaften eines Poststücks in den Poststückinformationen können etwaig auftretende Störungen direkt auf bestimmte Eigenschaften der Poststücke zurückgeführt werden. Daraufhin können Poststücke, welche bestimmte Eigenschaften aufweisen, gezielt ausgeschleust werden, bevor sie in ein Handhabungssystem gelangen. Alternativ oder zusätzlich kann das Handhabungssystem so angepasst werden, dass Poststücke mit Eigenschaften, bei denen in der Vergangenheit Störungen aufgetreten sind, für das Handhabungssystem problemlos handhabbar sind.

Vorzugsweise kann das Verfahren ein Ausgeben eines Signals basierend auf den Störungsinformationen umfassen. So kann beispielsweise an zentraler Stelle angezeigt werden, dass es bei einem Handhabungssystem zu einer Störung gekommen ist. Dadurch kann ein Nutzer schnell auf eine Störung reagieren und diese beseitigen. Vorzugsweise kann das Signal einen Ort und/oder Abschnitt in dem Handhabungssystem umfassen, an welchem die Störung aufgetreten ist. Dadurch kann schnell erkannt werden, wo genau das Problem vorliegt. Ferner kann das Signal Poststückinformationen umfassen, sodass auf einfache Art und Weise erkannt werden kann, welches Poststück bzw. welche Eigenschaften eines Poststücks zu der jeweiligen Störung geführt haben.

Vorzugsweise umfasst das Verfahren ferner ein Bestimmen von Bewertungsinformationen, die indikativ für eine Handhabbarkeit eines Poststück in dem Handhabungssystem sind, wobei die Bewertungsinformationen vorzugsweise auf den Poststückinformation des Poststück basierend bestimmt werden, und wobei die Bewertungsinformationen ferner basierend auf den, den Poststückinformationen zugeordneten Störungsinformationen von zuvor dem Handhabungssystem zugeführten Poststücken bestimmt sind. Die Bewertungsinformationen können also eine Bewertung für jedes Poststück abgeben, ob das Poststück von dem Handhabungssystem gehandhabt werden kann oder nicht. Vorzugsweise können die Bewertungsinformationen eines Poststücks bestimmt werden, bevor das Poststück dem Handhabungssystem zugeführt wird. Somit kann eine Störung in dem Handhabungssystem vermieden werden. Vorzugsweise werden die Bewertungsinformationen an einer Identifizierungseinheit, an welcher die Poststückinformationen erlangt werden, bestimmt. So können beispielsweise die Bewertungsinformationen basierend auf zuvor gemachten Erfahrungen mit Poststücken bzw. mit Eigenschaften von Poststücken bestimmt werden. Genauer gesagt kann durch das Zuordnen der Störungsinformationen zu Poststückinformationen einer Vielzahl von zuvor abgefertigten Poststücken eine Basis geschaffen werden, auf welcher aktuell zugeführte Poststücke bewertet werden können. d. h. für aktuell zugeführte Poststücke können Bewertungsinformationen erstellt werden, die eine Aussage darüber treffen können, ob das Poststück zu einer Störung in dem Handhabungssystem führen wird oder nicht. Basierend auf der Datengrundlage können die Bewertungsinformationen eine Wahrscheinlichkeit umfassen, welche aussagt, mit welcher Wahrscheinlichkeit das Poststück von dem Handhabungssystem ohne Störung gehandhabt werden kann. In einem weiteren Schritt kann eine Bewertung stattfinden, die Poststücke ab einer bestimmten Wahrscheinlichkeit, dass diese in dem Handhabungssystem eine Störung hervorrufen, vor dem Zuführen des Poststücks zu dem Handhabungssystem, ausschleust. Somit kann das System insgesamt betriebssicherer gemacht werden und ein Auftreten von Störungen vermindert werden.

Vorzugsweise sind die Bewertungsinformationen indikativ dafür, in welchen Abschnitten des Handhabungssystems ein Poststück nicht gehandhabt werden kann. In diesem Sinne kann der Begriff "nicht gehandhabt werden kann" bedeuten, dass das Poststück in einem bestimmten Abschnitt des Handhabungssystems mit hoher Wahrscheinlichkeit eine Störung hervorruft und/oder beschädigt wird. Durch die ortsgenaue Angabe, an welchem Abschnitt das Poststück in dem Handhabungssystem vermutlich eine Störung hervorrufen wird, kann auch gezielt eine Umleitung um diese Stelle eingerichtet werden. Somit muss nicht das gesamte Handhabungssystem umgangen werden, sondern es kann lediglich ein Teilabschnitt des Handhabungssystems von dem Poststück umgangen werden. Ferner können auch Abschätzungen angestellt werden, welche Poststückeigenschaften in welchem Abschnitt des Handhabungssystems vermutlich zu Störungen führen werden. Somit ist eine zielgenaue Auslegung des Handhabungssystems auf zu erwartende Poststücke mit bestimmten Eigenschaften möglich.

Vorzugsweise wird das Bestimmen mit einem Klassifikator durchgeführt. Mit anderen Worten kann das Bestimmen von Bewertungsinformationen mit einem Klassifikator durchgeführt werden. Der Klassifikator kann hierbei ein Komparator sein, der aktuell vorliegende Poststücke bzw. deren Eigenschaften mit abgespeicherten Poststücken bzw. abgespeicherten Eigenschaften von Poststücken vergleicht. Tritt ein Treffer auf (d.h. stimmen die gespeicherten Informationen mit den aktuell identifizierten Informationen überein), so kann der Klassifikator bestimmen, ob für die gespeicherten Poststückinformationen in der Vergangenheit eine Störung in dem Handhabungssystem aufgetreten ist. Sind bereits Störungen aufgetreten, so können entsprechende Bewertungsinformationen bestimmt werden. Dadurch kann vermieden werden, dass erneut Poststücke, die in der Vergangenheit bereits zu Störungen geführt haben, erneut dem Handhabungssystem zugeführt werden. Ferner kann es vorkommen, dass ein Poststück einige Male problemlos von dem Handhabungssystem abgefertigt wurde und einige andere Male Störungen hervorgerufen hat. Hierbei können die Bewertungsinformationen basierend auf einem Verhältnis zwischen den erfolgreichen Abfertigungen und den nicht erfolgreichen Abfertigungen bestimmt werden. Dies bietet den Vorteil, dass individuell eingestellt werden kann, wie strikt die Bewertungsinformationen bestimmt werden sollen. Ist beispielsweise gewünscht, dass möglichst keine Störungen auftreten sollen, kann vorgegeben werden, dass das Verhältnis null sein soll. Nur in diesem Fall können dann die Bewertungsinformationen dann indikativ dafür sein, dass das Poststück in dem Handhabungssystem abgefertigt werden kann. Entsprechend kann eine Anpassungsmöglichkeit geschaffen werden, die es erlaubt, einen Betrieb des Handhabungssystem basierend auf den Bewertungsinformationen bereitzustellen, der individuellen Anforderungen angepasst werden kann.

Vorzugsweise umfasst der Klassifikator ein neuronales Netz oder einen lernenden Algorithmus. Der Klassifikator kann beispielsweise ein lernender Algorithmus sein, der so konfiguriert sein kann, dass er Eingabedaten auf gewünschte Ausgabedaten abbildet. Lernen kann sich auf die Eigenschaft beziehen, dass der Algorithmus ein allgemeines Modell mit Parametern definieren kann. Die Zuordnung von Eingabedaten zu Ausgabedaten kann eine mathematische Funktion sein, die von Parametern abhängt. Der Algorithmus kann die Zuordnung von Eingabedaten zu Ausgabedaten erlernen, indem er seine Parameter für gegebene Paare von Eingabedaten (Trainings-Eingangsdaten) und gewünschten Ausgabedaten (Trainings-Ausgangsdaten) so eingestellt, dass die Ausgabe des Algorithmus der gewünschten Ausgabe so ähnlich wie möglich ist. Die Ähnlichkeit kann durch eine mathematische Kostenfunktion definiert werden (d. h. eine Abbildung, die den Output und den gewünschten Output des Lernalgorithmus als Eingabe nimmt und in eine reelle Zahl umwandelt), die von einem Benutzer (z.B. einem Entwickler) angegeben werden muss. Je niedriger der Wert (d. h. die reale Zahl) der Kostenfunktion ist, desto ähnlicher ist die Ausgabe der gewünschten Ausgabe. Der lernende Algorithmus kann genauso ein neuronales Netz sein. Dementsprechend kann der lernende Algorithmus trainiert werden. Darüber hinaus kann der lernende Algorithmus auch neu trainiert werden. Die Nachschulung kann ähnlich wie die Schulung erfolgen. Der Unterschied besteht darin, dass der lernende Algorithmus beim Training mit zufälligen Werten für seine Parameter beginnen kann. Wenn der lernende Algorithmus hingegen neu trainiert wird, kann er mit den Werten eines zuvor trainierten lernenden Algorithmus beginnen. Daher kann das erneute Trainieren des lernenden Algorithmus im Vergleich zum Trainingsschritt schneller und effizienter sein. Für das Training des lernenden Algorithmus kann ein Trainingssatz verwendet werden. Bei der Verwendung eines lernenden Algorithmus oder eines neuronalen Netzes bietet sich der Vorteil, dass der Klassifikator Bewertungsinformationen auch in dem Fall ausgeben kann, bei dem das aktuell vorliegende Poststück so noch nie in der Vergangenheit dem Handhabungssystem zugeführt wurde. Mit anderen Worten kann der Klassifikator auch eine Abschätzung treffen, ob es bei einem Zuführen des Poststücks zu dem Handhabungssystem zu einer Störung kommt, wenn das Poststück bzw. ein Poststück mit den Eigenschaften des aktuell vorliegenden Poststücks zuvor noch nie dem Handhabungssystem zugeführt wurde. Dadurch können Bewertungsinformationen auch mit einer geringeren Datengrundlage zuverlässig erstellt werden und ein Betrieb des Handhabungssystems verbessert werden.

Vorzugsweise wird für zumindest zwei Abschnitte in dem Handhabungssystem jeweils ein separater Klassifikator bereitgestellt. Mit anderen Worten kann es für das Handhabungssystem eine Vielzahl von Klassifikatoren geben, die jeweils individuell Bewertungsinformationen bestimmen. Dies bietet den Vorteil, dass Bewertungsinformationen positionsindividuell bzw. positionsgenau für verschiedene Abschnitte in dem Handhabungssystem bestimmt werden können. So kann es vorkommen, dass ein Poststück einen Abschnitt des Handhabungssystems problemlos passiert, wohingegen dasselbe Poststück an einem anderen Abschnitt des Handhabungssystems eine Störung hervorrufen kann. Durch Vorsehen von mehreren Klassifikatoren kann hierbei positionsgenau bestimmt werden, wo das jeweilige Poststück eine Störung in dem Handhabungssystem hervorrufen kann. Dadurch können Problemstellen leicht identifiziert werden.

Vorzugsweise unterscheiden sich die Klassifikatoren für die zumindest zwei Abschnitte in dem Handhabungssystem durch ihre Trainingsdaten. Mit anderen Worten umfassen die Trainingsdaten Störungsinformationen, die einer Position entsprechend dem Abschnitt, für welchen der Klassifikator trainiert werden soll, entsprechen. Dadurch können die Klassifikatoren mit unterschiedlichen Trainingsdaten trainiert werden und somit unterschiedliche Ergebnisse liefern. Dadurch sind hochgenaue Analysen möglich, wo es in dem Handhabungssystem zu Störungen kommen kann.

Vorzugsweise umfasst das Verfahren ferner ein Ausschleusen eines Poststücks basierend auf den Bewertungsinformationen, sodass das ausgeschleuste Poststück dem Handhabungssystem nicht zugeführt wird. Somit können Poststücke, bei denen zu erwarten ist, dass sie in dem Handhabungssystem eine Störung hervorgerufen oder selbst beschädigt werden, vor einem Zuführen zu dem Handhabungssystem ausgeschleust werden. Eine solche Ausschleusung kann beispielsweise mittels Weiche und/oder mittels eines Roboters geschehen. Somit kann ein Poststück, bei welchem eine Störung zu erwarten ist, aus dem Prozess genommen werden. Abhängig davon, wo eine Störung in dem Handhabungssystem durch das Poststück zu erwarten ist, kann das Poststück auch lediglich den Abschnitt umgehen, bei dem die Störung zu erwarten ist. Dadurch kann das Gesamtsystem störfester gemacht werden.

Vorzugsweise ist das Ausschleusen durch einen Roboter und/oder eine Abzweigung in den Transportmechanismus für Poststücke realisiert. Somit kann sichergestellt werden, dass nach einem Identifizieren des Poststücks zuverlässig von den übrigen Poststücken, welche dem Handhabungssystem zugeführt werden, getrennt wird. Zu einem späteren Zeitpunkt kann das ausgeschleuste Poststück wieder dem Prozess zugeführt werden.

Vorzugsweise umfasst das Verfahren ferner ein Ändern oder Anpassen eines Betriebs des Handhabungssystems basierend auf den den Poststückinformationen zugeordneten Störinformationen. Mit anderen Worten kann das Handhabungssystem basierend auf den Störinformationen und den Poststückinformationen abgeändert werden. So können beispielsweise Abschnitte des Handhabungssystems, welches bei bestimmten Poststücken bzw. bestimmten Eigenschaften von Poststücken immer wieder Störungen hervorrufen, konstruktiv umgestaltet werden, sodass Störungen vermieden werden können. Dadurch bietet sich der Vorteil, dass das Handhabungssystem selbst im Betrieb einfach auf derzeit vorliegende oder zu erwartende Betriebsbedingungen (d. h. bestimmte Poststücke mit bestimmten Eigenschaften) angepasst werden kann. Dadurch kann das Handhabungssystem robuster ausgestaltet werden. Ferner kann ein Kunde, welcher das Handhabungssystem betreibt, dieses selbst auf seine eigenen Anforderungen anpassen. Ferner kann das Ändern oder Anpassen eines Betriebs des Handhabungssystems auch auf den Bewertungsinformation basieren. Dadurch kann eine noch genauere Anpassung des Handhabungssystems realisiert sein.

Gemäß einem weiteren Aspekt der vorliegenden Erfindung wird ein Verfahren zum Trainieren oder Umtrainieren eines Klassifikators zur Bestimmung von Bewertungsinformationen über einem Handhabungssystem zuzuführende Poststücke bereitgestellt, wobei das Verfahren umfasst: Ein Empfangen von Eingangs-Trainingsdaten, nämlich Poststückinformationen, und ein Empfangen von Ausgangs-Trainingsdaten, nämlich den Poststückinformationen zugeordnete Störungsinformationen. Somit lässt sich ein nicht in Betrieb befindlicher Klassifikator mit Daten aus einem vorhergehenden Betrieb trainieren. Dadurch kann auch bei einem Neustart eines Betriebs der Klassifikator direkt Bewertungsinformationen bestimmen, die eine Aussage treffen können, welches Poststück in dem Handhabungssystem vermutlich eine Störung hervorrufen werden und welche nicht. Es kann sich bei einem Trainieren um einen untrainierten Klassifikator handeln, dessen Parameter beliebig eingestellt sind. Demgegenüber kann es sich bei einem Umtrainieren des Klassifikators um einen bereits angelernten Klassifikator handeln, der bereits angepasste Parameter aufweist. Hierbei können die Parameter lediglich an neue Umstände angepasst werden. Das Umtrainieren weist eine höhere Effizienz auf, da es in einer geringeren Zeit realisierbar ist.

Gemäß einem weiteren Aspekt der vorliegenden Erfindung wird ein Computerprogramm bereitgestellt, das Anweisungen enthält, die, wenn das Programm von einer Recheneinheit ausgeführt wird, die Recheneinheit veranlasst, das Verfahren gemäß einer der obigen Ausführungsformen durchzuführen. Dies gilt für das Verfahren zum Analysieren von Störungen bei einem Betrieb eines Handhabungssystems und für das Trainieren oder Umtrainieren eines Klassifikators zur Bestimmung von Bewertungsinformation über eine in dem Handhabungssystem zuzuführende Poststücke. Alternativ kann der Klassifikator auch als Hardware implementiert werden, z.B. mit festen Verbindungen auf einem Chip oder eine andere Rechnereinheit. Bei der Recheneinheit, die das erfindungsgemäße Verfahren ausführen kann, kann es sich um eine beliebige Verarbeitungseinheit wie eine CPU (central processing unit) oder GPU (graphics processing unit) handeln. Die Recheneinheit kann Teil eines Computers, einer Cloud, eines Servers, eines mobilen Geräts wie eines Laptops, Tablet-Computers, Mobiltelefons, Smartphones usw. sein. Insbesondere kann die Recheneinheit Teil eines Handhabungssystems sein.

Ferner bezieht sich die Erfindung auf ein computerlesbares Medium, dass Anweisungen enthält, die, wenn sie von einer Recheneinheit ausgeführt werden, die Recheneinheit veranlassen, das erfindungsgemäße Verfahren, insbesondere das obige Verfahren, durchzuführen. Ein solches computerlesbares Medium kann ein beliebiges digitales Speichermedium sein, beispielsweise eine Festplatte, ein Server, eine Cloud oder ein Computer, ein optisches oder ein magnetisches digitales Speichermedium, eine CD-ROM, eine SSD-Karte, eine SD-Karte, eine DVD oder ein USB- oder anderer Speicherstick.

Gemäß einem weiteren Aspekt der vorliegenden Erfindung wird ein System zum Analysieren von Störungen bei einem Betrieb eines Handhabungssystems bereitgestellt, wobei das Handhabungssystem dazu ausgestaltet ist, Poststücke zu handhaben, wobei das System umfasst: eine Zufuhreinheit zum Zuführen von Poststücken zu einem Handhabungssystem, eine Identifizierungseinheit, zum Identifizieren von Poststücken, die auf der Zufuhreinheit dem Handhabungssystem zugeführt werden, um Poststückinformationen zu erlangen, und eine Störungserfassungseinheit zum Erfassen einer Störung bei einem Betrieb des Handhabungssystems, um Störungsinformationen zu erlangen, eine Steuereinheit, die dazu ausgestaltet ist, die Störungsinformationen den Poststückinformationen zuzuordnen.

Vorzugsweise ist die Steuereinheit dazu ausgestaltet, das Verfahren gemäß einer der obigen Ausgestaltungen auszuführen.

Gemäß einem weiteren Aspekt der vorliegenden Erfindung wird ein Poststück Abfertigungssystem bereitgestellt, welches ein System gemäß einer der obigen Ausgestaltungen umfasst sowie ein Sorter, der dazu ausgestaltet ist, Poststücke einer bestimmten Endstelle zuzuführen. Der Sorter kann hierbei stromabwärts des Handhabungssystems angeordnet sein. Die Identifizierungseinheit kann stromaufwärts des Handhabungssystems angeordnet sein.

Ferner kann das System eine Umleitungsstrecke umfassen, die die Identifizierungseinheit direkt mit dem Sorter verbindet. Somit kann über die Umleitungsstrecke ein Poststück, von der Identifizierungseinheit unter Umgehung des Handhabungssystems direkt dem Sorter zugeführt werden. Somit können Poststücke, welche vermutlich zu Störungen in dem Handhabungssystem führen werden, dieses umgehen und direkt einem weiteren Prozess zur Verfügung gestellt werden.

Einzelne Merkmale oder Ausführungsformen der oben dargestellten Ausführungsformen können mit anderen Merkmalen oder anderen Ausführungsformen kombiniert werden und so neue Ausführungsformen bilden. Weiterbildungen und Eigenschaften der Merkmale oder der Ausführungsformen gelten dann analog auch für die neuen Ausführungsformen. Vorteile und Ausgestaltungen, die in Verbindung mit den Verfahren angegeben sind, gelten analog auch für die Vorrichtung und andersherum.

Im Folgenden werden zu bevorzugende Ausführungsformen mit Bezug auf die Figuren beschrieben.
- **Fig. 1**: ist eine schematische Darstellung eines Systems gemäß einer Ausführungsform der vorliegenden Erfindung.
- **Fig. 2**: ist eine schematische Darstellung eines Systems gemäß einer weiteren Ausführungsform der vorliegenden Erfindung.
- **Fig. 3**: ist eine schematische Darstellung eines Systems gemäß einer weiteren Ausführungsform der vorliegenden Erfindung.
- **Fig. 4**: ist ein schematisches Ablaufdiagramm eines Verfahrens gemäß einer Ausführungsform der vorliegenden Erfindung.

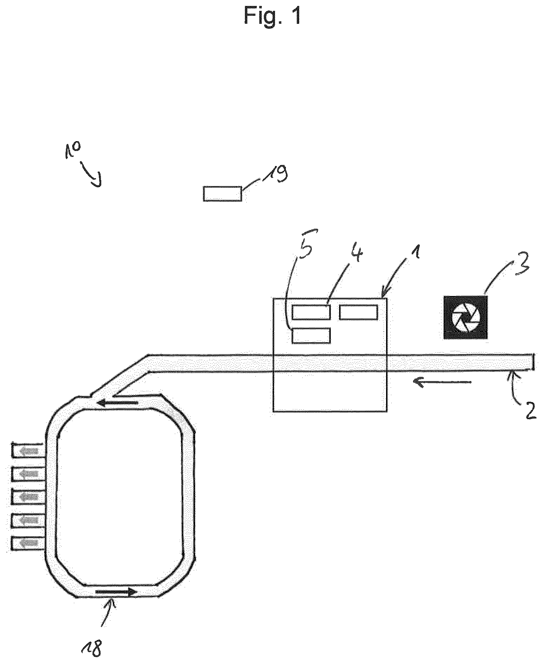

**Fig. 1** zeigt schematisch ein System 10 zum Analysieren von Störungen bei einem Betrieb eines Handhabungssystems 1. Das System 10 umfasst eine Zufuhreinheit 2, die dazu ausgestaltet ist, Poststücke 12 (in Fig. 1 nicht dargestellt) einem Handhabungssystem 1 in Transportrichtung (siehe Pfeil, von der rechten Bildseite zu der linken Bildseite) zuzuführen. Die Zufuhreinheit 2 transportiert das Poststück 12 zu einer Poststückerfassungseinheit 3, die dazu ausgestaltet ist, die Poststücke 12 zu identifizieren, um Poststückinformationen zu erlangen. Die Identifizierungseinheit 3 weist zumindest eine Kamera auf, die Eigenschaften des Poststücks identifizieren kann. Dann kann das Poststück 12 weiter auf der Zufuhreinheit 2 in Richtung zu dem Handhabungssystem 1 transportiert werden. Tritt in dem Handhabungssystem 1 eine Störung auf, kann eine Störungserfassungseinheit 4, die in dem Handhabungssystem 1 vorgesehen ist, die Störung erfassen und Störungsinformationen erlangen. Eine Steuereinheit 5 ist dazu ausgestaltet, die Störungsinformationen, die von der Störungserfassungseinheit 4 erlangt wurden, den Poststückinformationen, die von der Identifizierungseinheit 3 erlangt wurden, zuzuordnen. Ferner ist die Steuereinheit 5 dazu ausgestaltet, die den Poststückinformationen zugeordneten Steuerinformationen einer Anzeigeeinheit 19 zuzuführen, sodass die den Poststückinformationen zugeordneten Steuerinformationen dort dargestellt (z.B. visualisiert) werden können. Somit kann es einem Nutzer ermöglicht werden, auf einfache Art und Weise zu erkennen, welche Poststücke zu Störungen in dem Handhabungssystem 1 führen. Dazu können die Poststückinformationen weitere Details über die Poststücke, wie beispielsweise Größe, Gewicht, Länge, Breite, Höhe, Oberflächenbeschaffenheit und sonstige an den Poststücken vorgesehene Materialien umfassen.

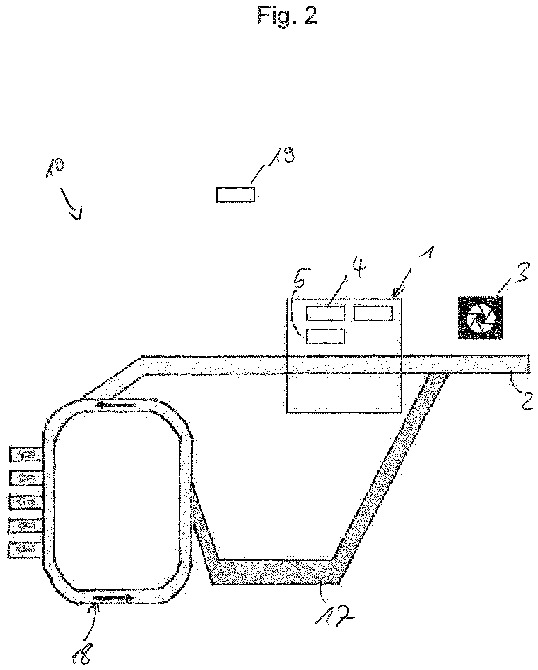

**Fig. 2** zeigt ein System gemäß einer weiteren Ausführungsform der vorliegenden Erfindung. Das in Fig. 2 dargestellte System basiert auf dem in Fig. 1 dargestellten System mit dem Unterschied, dass eine Umgehung 17 vorgesehen ist, die dazu ausgestaltet ist, Poststücke 5 stromabwärts der Identifizierungseinheit 3 auszuschleusen und unter Umgehung des Handhabungssystems 1 einem Sorter 18 zuzuführen. Somit kann bei der vorliegenden Ausführungsform nicht nur erkannt werden, welche Poststücke zu Problemen in dem Handhabungssystem 1 führen können, sondern diese Poststücke auch direkt ausgeschleust werden, sodass diese Poststücke 5 nicht dem Handhabungssystem 1 zugeführt werden. Dadurch kann ein Auftreten von Störungen aktiv vermieden werden. Nichtsdestotrotz kann auch bei der vorliegenden Ausführungsform, die den Poststückinformationen zugeordneten Störungsinformationen mittels der Anzeigeeinheit 19 dargestellt werden.

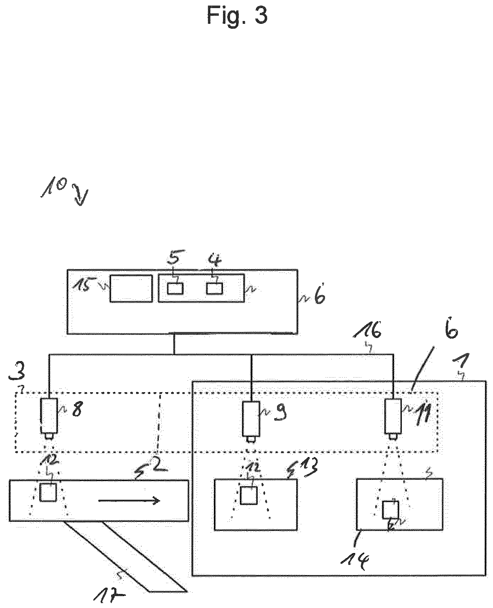

**Fig. 3** zeigt schematisch ein weiteres System 10 gemäß einer weiteren Ausführungsform der vorliegenden Erfindung. Bei dem in Fig. 3 dargestellten System ist die Transportrichtung nun von der linken Seite zu der rechten Seite. Ferner weist auch die vorliegende Ausführungsform eine Identifizierungseinheit 3 auf. Die Identifizierungseinheit 3 weist eine erste Kamera 8 auf, die dazu ausgestaltet ist, die Poststückinformationen durch ein Identifizieren der Poststücke 12 zu erlangen. Ferner ist eine Überwachungseinheit 6 vorgesehen, die eine zweite Kamera 9 und eine dritte Kamera 11 aufweist. Die zweite Kamera 9 und die dritte Kamera 11 sind dazu ausgestaltet, die Poststücke 12 bei einem Durchlaufen des Handhabungssystem 1 zu tracken. Somit können die Positionen der Poststücke 12 in dem Handhabungssystem 1 bestimmt werden. Bei der vorliegenden Ausführungsform ist die zweite Kamera 9 dazu ausgestaltet, zu erkennen, wenn ein Poststück 12 an einem ersten Abschnitt 13 des Handhabungssystems 1 positioniert ist. Ferner ist die dritte Kamera 11 dazu ausgestaltet, zu erkennen, wenn ein Poststück 12 an dem zweiten Abschnitt 14 des Handhabungssystems 1 positioniert ist. Ferner weist die vorliegende Ausführungsform einen Datenspeicher 15 auf, in dem die bereits erlangten Daten (d.h. Informationen) hinterlegt werden können. Die einzelnen Systeme der vorliegenden Ausführungsformen sind mittels Datenleitung 16 miteinander verbunden. Die Datenleitung 16 kann eine physische Leitung oder auch eine kabellose Leitung sein.

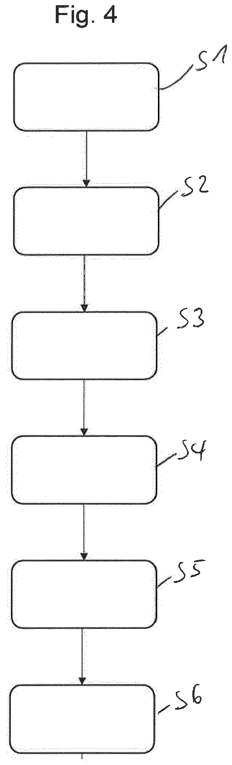

**Fig. 4** stellt ein schematisches Ablaufdiagramm eines Verfahrens gemäß einer Ausführungsform der vorliegenden Erfindung dar. In einem ersten Schritt S1 wird zumindest ein Merkmal eines dem Handhabungssystem 1 zuzuführenden Poststücks identifiziert, um Poststückinformationen zu erlangen. Dann wird in einem zweiten Schritt S2 eine Störung bei einem Betrieb des Handhabungssystems 1 erfasst, um Störungsinformationen zu erlangen. In einem dritten Schritt S3 wird zumindest ein Störungspoststück oder eine Störungspoststückgruppe bestimmt, welches oder welche die Störung ausgelöst hat. Letztlich werden die Störungsinformationen in einem vierten Schritt S4 den Poststückinformationen des Störungspoststücks oder der Störungspoststückgruppe zugeordnet. Dadurch können Informationen bereitgestellt werden, dies ermöglichen Poststücke, welche immer wieder zu Störungen führen, zu identifizieren. Ferner kann identifiziert werden, wo welche Poststücke bzw. welche Poststückeigenschaften Störungen in dem Handhabungssystem hervorrufen. In einer weiteren Ausführungsform umfasst das Verfahren einen fünften Schritt S5, bei dem ein Signal basierend auf den Störungsinformationen ausgegeben wird. Das Signal wird vorzugsweise auf einer Anzeigeeinheit 19 ausgegeben. Optional kann ein sechster Schritt S6 vorgesehen sein, bei dem Bewertungsinformationen bestimmt werden, die indikativ für eine Handhabbarkeit eines Poststücks in dem Handhabungssystem sind. Die Bewertungsinformationen basieren auf den Poststückinformationen des Poststücks und auf den den Poststückinformationen zugeordneten Störungsinformationen von zuvor dem Handhabungssystem zugeführten Poststücken.

Basierend auf den oben dargestellten Ausführungsformen kann ein Handhabungssystem gezielt störfester gemacht werden. Ferner können störende Poststücke ausgeschleust werden, bevor sie eine Störung verursachen oder selbst beschädigt werden.

### Bezugszeichenliste:

- 1: Handhabungssystem
- 2: Zufuhreinheit
- 3: Identifizierungseinheit
- 4: Störungserfassungseinheit
- 5: Steuereinheit
- 6: Überwachungseinheit
- 8: erste Kamera
- 9: zweite Kamera
- 10: System
- 11: dritte Kamera
- 12: Poststück
- 13: erster Abschnitt
- 14: zweiter Abschnitt
- 15: Speicher
- 16: Datenleitung
- 17: Umgehung
- 18: Sorter
- 19: Anzeigeeinheit

## Patentansprüche

1. Verfahren zum Analysieren von Störungen bei einem Betrieb eines Handhabungssystems (1), welches dazu ausgestaltet ist, Poststücke (12) zu handhaben, umfassend die Schritte:
- Identifizieren von zumindest einem Merkmal eines dem Handhabungssystem (1) zuzuführenden Poststücks (12), um Poststückinformationen zu erlangen,
- Erfassen einer Störung bei einem Betrieb des Handhabungssystems (1), um Störungsinformationen zu erlangen,
- Bestimmen von zumindest einem Störungspoststück (12) oder einer Störungspoststückgruppe, welches oder welche die Störung ausgelöst hat, und
- Zuordnen der Störungsinformationen zu den Poststückinformationen des Störungspoststücks (12) oder der Störungspoststückgruppe.

2. Verfahren gemäß Anspruch 1, wobei die Störungsinformationen eine Position und/oder eine Störungsart des Störungspoststücks (12) beim Auftreten der Störung in dem Handhabungssystem (1) umfassen.

3. Verfahren gemäß Anspruch 2,
wobei die Position des Störungspoststücks (12) basierend auf einem Tracking des Störungspoststücks (12) bei einem Durchlaufen des Handhabungssystems (1) bestimmt wird, und/oder
wobei die Position des Störungspoststücks (12) basierend auf einem Betriebsparameter des Handhabungssystems (1), insbesondere einer Transportgeschwindigkeit der Poststücke (12) und/oder einem Durchsatz des Handhabungssystems (1), bestimmt wird.

4. Verfahren gemäß einem der vorhergehenden Ansprüche, wobei die Poststückinformationen ein Gewicht, eine Größe, eine Länge, eine Breite, eine Höhe, eine Verschlussart und/oder eine Oberflächenbeschaffenheit des Poststücks (12) umfassen.

5. Verfahren gemäß einem der vorhergehenden Ansprüche, umfassend Bestimmen von Bewertungsinformationen, die indikativ für eine Handhabbarkeit eines Poststücks (12) in dem Handhabungssystem (1) sind,
wobei die Bewertungsinformationen basierend auf den Poststückinformationen des Poststücks (12) bestimmt sind,
wobei die Bewertungsinformationen ferner basierend auf den den Poststückinformationen zugeordneten Störungsinformationen von zuvor dem Handhabungssystem (1) zugeführten Poststücken (12) bestimmt sind.

6. Verfahren gemäß Anspruch 5, wobei die Bewertungsinformationen ferner indikativ dafür sind, in welchem Abschnitt (13,14) des Handhabungssystems (1) ein Poststück (12) nicht gehandhabt werden kann.

7. Verfahren gemäß Anspruch 5 oder 6, wobei das Bestimmen mit einem Klassifikator durchgeführt wird.

8. Verfahren gemäß Anspruch 7, wobei der Klassifikator ein neuronales Netz oder einen lernenden Algorithmus umfasst.

9. Verfahren gemäß Anspruch 7 oder 8, wobei für zumindest zwei Abschnitte in dem Handhabungssystem (1) jeweils ein separater Klassifikator bereitstellt wird.

10. Verfahren gemäß einem der Ansprüche 5 bis 9, wobei das Verfahren ferner umfasst:
Ausschleusen eines Poststücks (12) basierend auf den Bewertungsinformationen, so dass das ausgeschleuste Poststück (12) dem Handhabungssystem (1) nicht zugeführt wird.

11. Verfahren gemäß Anspruch 10, wobei das Ausschleusen durch einen Roboter und/oder eine Abzweigung in den Transportmechanismus für Poststücke (12) realisiert ist.

12. Verfahren gemäß einem der vorhergehenden Ansprüche, wobei das Verfahren ferner umfasst:
Ändern oder Anpassen eines Betriebs des Handhabungssystems (1) basierend auf den den Poststückinformationen zugeordneten Störinformationen.

13. Verfahren zum Trainieren oder Umtrainieren eines Klassifikators zur Bestimmung von Bewertungsinformationen über einem Handhabungssystem (1) zuzuführende Poststücke (12), wobei das Verfahren umfasst:
Empfangen von Eingangs-Trainingsdaten, nämlich Poststückinformationen, Empfangen von Ausgangs-Trainingsdaten, nämlich den Poststückinformationen zugeordnete Störungsinformationen.

14. Computerprogramm, das Anweisungen enthält, die, wenn das Programm von einer Recheneinheit ausgeführt wird, die Recheneinheit veranlassen, das Verfahren nach einem der Ansprüche 1 bis 12 durchzuführen.

15. System (10) zum Analysieren von Störungen bei einem Betrieb eines Handhabungssystems (1), welches dazu ausgestaltet ist, Poststücke (12) zu handhaben, umfassend:
- eine Zufuhreinheit (2) zum Zuführen von Poststücken (12) zu einem Handhabungssystem (1),
- eine Identifizierungseinheit (3) zum Identifizieren von Poststücken (12), die auf der Zufuhreinheit (2) dem Handhabungssystem (1) zugeführt werden, um Poststückinformationen zu erlangen,
- eine Störungserfassungseinheit (4) zum Erfassen einer Störung bei einem Betrieb des Handhabungssystems (1), um Störungsinformationen zu erlangen, und
- eine Steuereinheit (5), die dazu ausgestaltet ist, die Störungsinformationen den Poststückinformationen zuzuordnen.
